# EUROPEAN PATENT SPECIFICATION

(11) **EP 3 371 062 B1**
(45) Date of publication and mention of the grant of the patent: **01.07.2020**
(21) Application number: 16861668.8
(22) Date of filing: 19.10.2016
(51) Int. Cl.: B65B 5/06, B65B 35/30, B65D 77/06, B65G 47/26, B65G 47/53, B65G 47/08, B65B 35/32, B65B 5/10

(54) **METHOD FOR PACKING LIQUID POUCHES INTO PACKAGING CARTONS AND AN APPARATUS FOR IMPLEMENTING THE METHOD**
VERFAHREN ZUM VERPACKEN VON FLÜSSIGKEITSBEUTELN IN VERPACKUNGSKARTONS UND VORRICHTUNG ZUR DURCHFÜHRUNG DES VERFAHRENS
PROCÉDÉ POUR EMBALLER DES POCHES DE LIQUIDE DANS DES CARTONS D'EMBALLAGE ET APPAREIL POUR METTRE EN OEUVRE LE PROCÉDÉ

(30) Priority: 02.11.2015 FI 20155785
(43) Date of publication of application: 12.09.2018
(73) Proprietor: Elecster OYJ, 37801 Akaa (FI)
(72) Inventor: HALONEN, Jukka, FI-37800 Akaa (FI)
(74) Representative: Papula Oy
(86) International application number: PCT/FI2016/050734
(87) International publication number: WO 2017/077177

(56) References cited:
- WO-A1-2010/100327
- WO-A1-2010/100327
- WO-A1-2015/132454
- CA-A1- 2 122 813
- US-A1- 2012 279 828
- US-B1- 6 357 210

## Description

The object of the present invention is a method for packing liquid pouches, e.g. pouches of milk, into packaging cartons, in which method the liquid pouches are manufactured in their manufacturing machine, transferred to a collector conveyor and dropped into packaging cartons. The object of the invention is also an apparatus implementing the method.

The invention thus relates to the packing of liquid pouches. Liquid pouches refer to pouches containing liquid, which pouches are manufactured from a membrane-type material. The liquid can be e.g. milk, buttermilk, juice or corresponding. The membrane-type material in question is generally a polyolefin, e.g. polyethylene or a K-polymer of polyethylene, or possibly nylon or some corresponding material. Liquid pouch thus refers also in the claims to a pouch that easily changes its shape and that contains liquid.

Liquid pouches are manufactured in a machine, in which the membrane-type material is discharged from a roll disposed in the machine, is folded into a pouch, seamed at the bottom end, filled with the desired liquid, seamed at the top end and at the same time truncated, when a finished liquid pouch is formed. The manufacturing machine of a liquid pouch is not described in more detail in this context because it can be any prior-art machine whatsoever. The invention relates to the packing of finished liquid pouches coming from the machine. A method and an apparatus for grouping and packing bulk filled pouches is known from document CA 2 122 813.

The liquid pouches are transported from their manufacturing machine by means of conveyors and finally dropped into packaging cartons, which in turn travel on their own conveyor. A packaging carton is generally a cardboard carton, but other packagings are, of course, possible within the scope of the invention. The number of liquid pouches in each carton is limited, of course, by their weight.

A one-liter pouch weighs approx. 1 kg. In many countries a maximum weight, which e.g. an employee of a factory or shop may lift, is defined. This weight is often approx. 10-12 kg, which thus dictates the number of liquid pouches in each carton.

When the pouches are dropped freely from a conveyor into a carton, they drop into an arbitrary attitude and location in the carton. There are many factors affecting the attitude in which a pouch finally drops into a carton. The biggest effective factor is the attitude in which the pouch starts its falling motion. Another important factor is the dropping height, which it is preferable to keep as small as possible.

When elongated pouches (generally 1-liter pouches) are transported on a collector conveyor towards the drop-off end in a transverse attitude, it is important that the pouch is as close as possible to a right angle, i.e. 90°, with respect to the direction of travel of the conveyor. If this is not so, the pouch will probably fall in an indeterminate attitude into the packaging carton. The aim, of course, is for the pouches to drop onto the conveyors in an optimal attitude already in earlier stages, but nevertheless some of the pouches remain more or less askew.

The aim is thus to get the pouches into a packaging carton in as tidy an order as possible. The width of a packaging carton is essentially as large as the length of a liquid pouch, in which case it is essential to get the pouches into the carton in a controlled manner. It is therefore advantageous to straighten the pouches before they fall into the carton. The maneuvering of the liquid pouches is, however, awkward, because their behavior differs considerably e.g. to that of solid packages or light bags. Also, there is relatively strong friction between the surface of the conveyor and the pouch already, for the reason that the pouches would not slip on an ascending section of the collector conveyor before falling into a carton. Owing to the high friction and the "slackness" of the pouch, the guide means on the conveyor in practice only moves the liquid, i.e. shapes the pouch, but does not actually move the pouch in relation to the surface of the conveyor. If the guide was made to be such that the move was made by force, the pouch would easily be squeezed or roll over owing to the friction, and the desired turn would not be achieved.

Another issue to be addressed in packing is preventing the pouches from falling during the replacement of a packaging carton, i.e. when the previous carton becomes full, is moved away and a new carton takes its place. Since the collector conveyor of the pouches is not stopped during replacement of a packaging carton, there must be a detent/buffer store at the end of the conveyor, which prevents pouches from falling during replacement of a carton. These types of stoppers are known in the art. They do not, however, perform the actual guiding/straightening before the dropping into a carton.

A method for packing liquid pouches and also a positioning guide are known from FI patent application 20095210.

CA 2122813 A1 discloses a system for grouping and conveying continuously arriving articles. The articles are for instance satchels filled with a bulk material like soap flakes or potato chips.

The aim of the present invention is to achieve a method with which the packing of liquid pouches into cartons takes place in better order than before. The method according to the invention is characterized in that the pouches fed onto the collector conveyor are positioned into essentially the same line in the transverse direction of the collector conveyor, and that before being dropped into packaging cartons the liquid pouches are assembled on the collector conveyor into groups of at least two liquid pouches behind an opening and closing grouper arranged transversely over the collector conveyor, which grouper is opened when the desired number of liquid pouches has collected behind it, after which the liquid pouches proceed on the collector conveyor as a single group and are dropped as a single group into a packaging carton.

One preferred embodiment of the method according to the invention is characterized in that a group is formed from three liquid pouches.

Another preferred embodiment of the method according to the invention is characterized in that a group is formed from four liquid pouches.

The object of the invention is also an apparatus for packing liquid pouches. The apparatus according to the invention is characterized in that arranged on the collector conveyor transversely with respect to its direction of movement is at least one grouper, by means of which the liquid pouches being transported on the conveyor are assembled into groups comprising at least two liquid pouches, and in that arranged above the collector conveyor on the discharge end of the receiving conveyor is a positioner, by means of which the liquid pouches being fed onto the collector conveyor from the receiving conveyor are positioned so that they are essentially in the same line in the transverse direction of the collector conveyor.

One preferred embodiment of the apparatus according to the invention is characterized in that arranged on the collector conveyor transversely with respect to its direction of movement is at least one grouper, by means of which the liquid pouches being transported on the conveyor are assembled into groups comprising at least two liquid pouches, and in that arranged above the collector conveyor on the discharge end of the receiving conveyor is a positioner, by means of which the liquid pouches being fed onto the collector conveyor from the receiving conveyor are positioned so that they are essentially in the same line in the transverse direction of the collector conveyor.

Another preferred embodiment of the apparatus according to the invention is characterized in that the positioner is a plate, the bottom end of which is bent towards the receiving conveyor for receiving the shorter side of a liquid pouch and dropping it onto the collector conveyor, and which plate is arranged to be turnable in such a way that its axis of turning is transverse with respect to the direction of movement of the receiving conveyor.

Yet another preferred embodiment of the apparatus according to the invention is characterized in that a counterweight is arranged on the plate above the axis of turning to resist the force of an arriving liquid pouch exerted on the bottom part of the plate.

One advantage of the invention that can be mentioned is that when dropped as groups the liquid pouches can be dropped in a more controlled manner than previously into packaging cartons, where they settle into better order and take up less space. Since the groups have already been formed on the collector conveyor, a grouper is not needed at the packing station after the collector conveyor.

In the following, the invention will be described in more detail by the aid of some preferred embodiments with reference to the attached drawings, wherein
Fig. 1 presents a part of the apparatus according to the invention.
Fig. 2 presents a grouper installed on a collector conveyor.
Fig. 3 presents a situation in which the grouper has opened.
Fig. 4 presents the exit end of the collector conveyor, where a group of liquid pouches is arriving at the packing station.
Fig. 5 presents a situation in which a group of liquid pouches has dropped from the collector conveyor into the packing station.

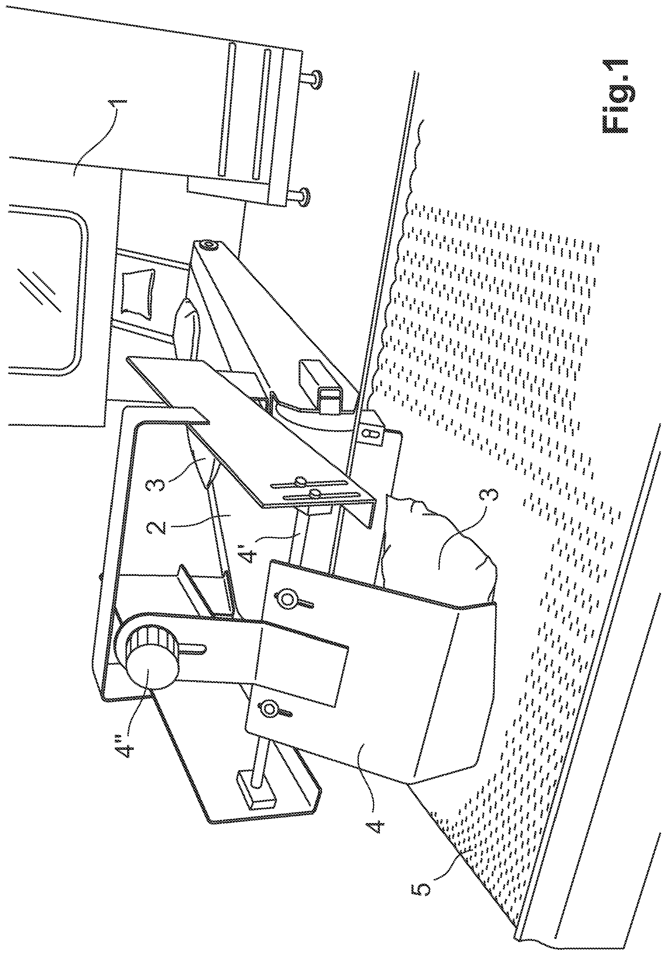

Fig. 1 presents a manufacturing machine 1 of liquid pouches, e.g. pouches of milk, which can thus be a fully prior art machine. Liquid pouches are manufactured in the machine 1, in which a membrane-type material is discharged from a roll disposed in the machine, is folded into a pouch, seamed at the bottom end, filled with the desired liquid, seamed at the top end and at the same time truncated, when a finished liquid pouch is formed. The manufacturing machine of a liquid pouch is not described in more detail in this context because it can be any machine whatsoever known in the art. The invention relates to the packing of finished liquid pouches 3 coming from the machine.

The finished liquid pouches are dropped onto receiving conveyors 2, of which there is one in this case, below the manufacturing machine 1. There can also be two or more receiving conveyors. The receiving conveyor 2 feeds the liquid pouches 3 onwards to the collector conveyor 5, the direction of movement of which is at a right angle with respect to the receiving conveyor. Since the liquid pouches come in the longitudinal direction on the receiving conveyors 2, they correspondingly settle onto the collector conveyor in a direction that is at a right angle with respect to the direction of movement of the conveyor, i.e. they move when transported by the collector conveyor with the long edge in front.

Above the collector conveyor at the discharge end of the receiving conveyor 2 is a positioner 4, by means of which the pouches being fed onto the collector conveyor 5 from the receiving conveyor 2 are positioned into essentially the same line in the transverse direction of the collector conveyor. In practice, the positioner 4 is a plate, the bottom end of which is bent towards the receiving conveyor for receiving the shorter side of a liquid pouch and dropping the liquid pouch 3 onto the collector conveyor as precisely as possible transversely with respect to the direction of movement of the collector conveyor. The positioner 4, i.e., the plate, is arranged to be turnable in such a way that its turning axis 4' is transverse with respect to the direction of movement of the receiving conveyor 2. A counterweight 4" is arranged on the plate above the turning axis 4' to resist the force of an arriving liquid pouch 3 exerted on the bottom part of the plate. The purpose of the positioner is thus to get a pouch to be as transverse as possible and also to make each pouch end up with the short side in essentially the same line in the transverse direction of the collector conveyor.

Only one horizontal collector conveyor 5 is presented in the drawings, but there can be more collector conveyors one after another and at least some of them can be ascending.

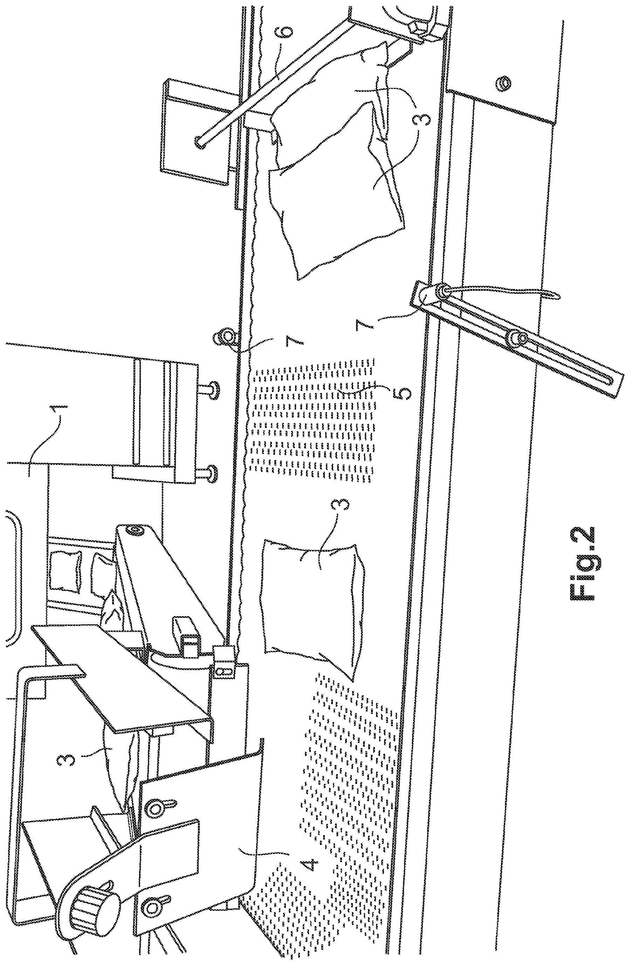

Fig. 2 presents on the right edge a grouper 6, which is a plate installed in a turnable manner. In the situation of Fig. 2 the plate is in the closed position, in which case the liquid pouches 3 do not progress forwards, even though the collector conveyor tries to move them to the right as viewing the figure. Thus, the first pouch 3 stops at the grouper and the second one stops behind it. The surface material of the collector conveyor 5 is made to be slightly slippery so that the liquid pouches can stay in position held by the grouper 6. On the collector conveyor 5, on which the grouper 6 is disposed, can be e.g. a plastic laminated structure having a suitably low friction coefficient.

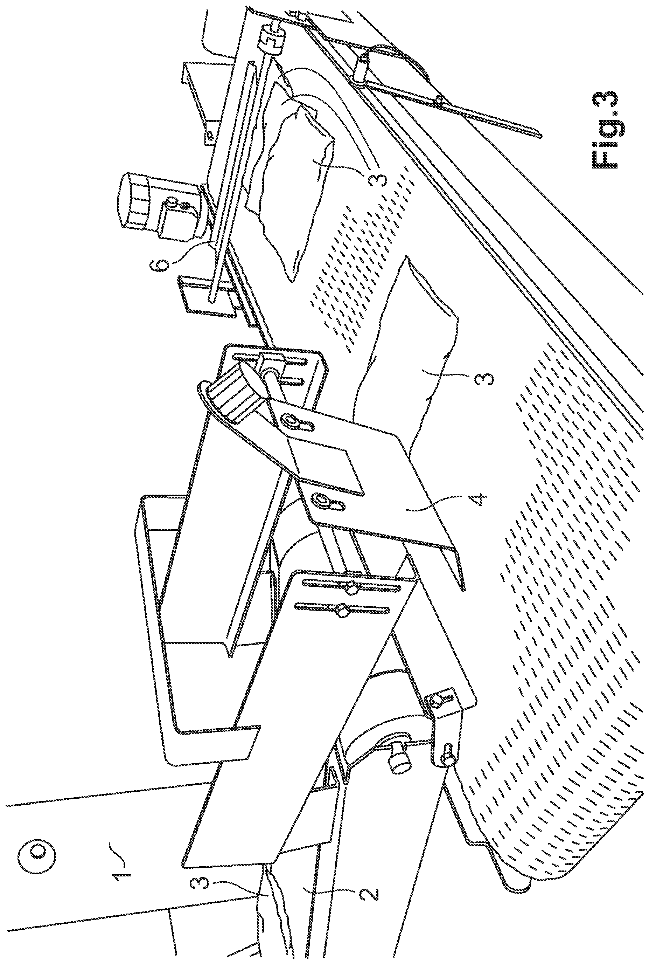

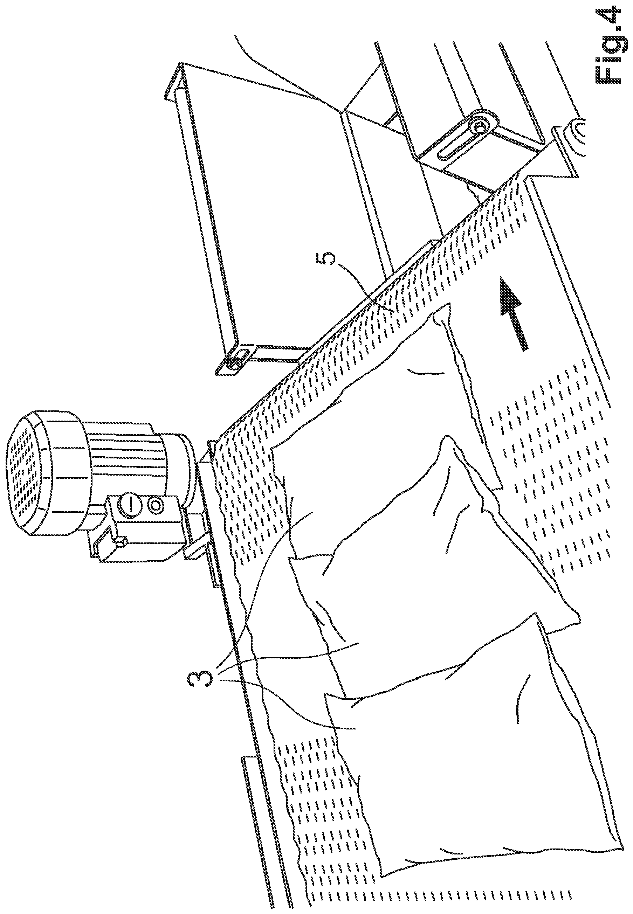

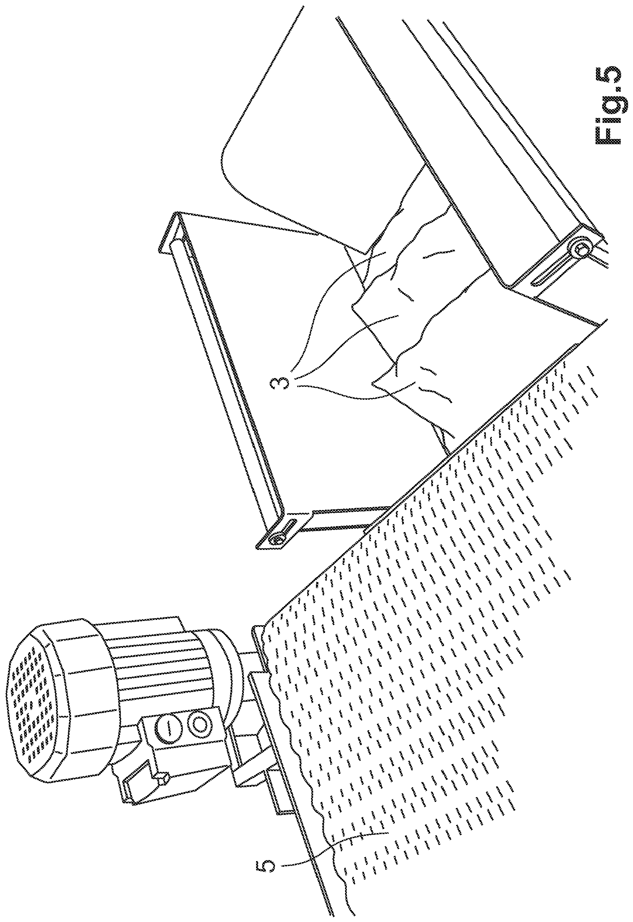

When the third liquid pouch 3 comes to the point of the photoelectric cell 7, i.e. very close to or even up against the previous pouch, the grouper opens, i.e. turns into the position presented by Fig. 3, in which case the group formed by the three liquid pouches 3 is able to go past the grouper 6 towards the packing station. In Fig. 4, the group formed by the liquid pouches 3 is already near the discharge end of the collector conveyor. In Fig. 5 the group of liquid pouches has dropped from the collector conveyor 5 into the packing station, from where they drop further as a single group into a cardboard carton or other packaging unit below.

The grouper 6 is a stopper plate pivoted on the edges of the collector conveyor and having two positions; a stopping position in which the plate prevents the progress of liquid pouches, and an open position in which the liquid pouches are able to proceed. In the open position the stopper plate is at an angle of approx. 90° to the stopping position.

It is also possible that the machine manufacturing the liquid pouches has two outputs, i.e. it also has two receiving conveyors, both of which feed liquid pouches onto the collector conveyor. In this case two groupers can be used, i.e. each output has its own grouper. At first, groups of two pouches are formed in both groupers, after which the groups are combined into a group of four pouches and are handled as a four-pouch group until they are in the packaging carton. In this embodiment one advantage is that formation of the group with the grouper is faster because only two pouches are needed per grouper. In the case of three pouches it is possible that the first and second pouch start little by little to displace in the lateral direction.

It is obvious to the person skilled in the art that the invention is not limited to the embodiments presented above, but that it can be varied within the scope of the claims presented below. The number of liquid pouches in one group is not limited to three or four, but instead can be any desired number whatsoever, generally depending on the size of the packaging carton.

The characteristic features possibly presented in the description in conjunction with other characteristic features can also, if necessary, be used separately to each other.

## Claims

1. Method for packing liquid pouches (3), e.g. pouches of milk, into packaging cartons, in which method the liquid pouches (3) are manufactured in their manufacturing machine (1), transferred to a collector conveyor (5) and dropped into packaging cartons, wherein the pouches while being fed onto the collector conveyor (5) are positioned into essentially the same line in the transverse direction of the collector conveyor (5), and wherein before being dropped into packaging cartons the liquid pouches (3) are assembled on the collector conveyor (5) into groups of at least two liquid pouches behind an opening and closing grouper (6) arranged transversely over the collector conveyor (5), which grouper (6) is opened when the desired number of liquid pouches (3) has collected behind it, after which the liquid pouches (3) proceed on the collector conveyor (5) as a single group and are dropped as a single group into a packaging carton.

2. Method according to claim 1, **characterized in that** a group is formed from three liquid pouches (3).

3. Method according to claim 1, **characterized in that** a group is formed from four liquid pouches (3).

4. Apparatus for packing liquid pouches (3), e.g. pouches of milk, into packaging cartons, which apparatus comprises at least one receiving conveyor (2) for transporting the liquid pouches from the manufacturing machine (1), and also a collector conveyor (5) in the transverse direction with respect to the receiving conveyor, for collecting the liquid pouches from the receiving conveyor (2) and for transporting them onwards towards the packing station, where the liquid pouches (3) are arranged to drop into packaging cartons, wherein arranged on the collector conveyor (5) transversely with respect to its direction of movement is at least one grouper (6), by means of which the liquid pouches (3) being transported on the conveyor are assembled into groups comprising at least two liquid pouches (3), and wherein arranged above the collector conveyor (5) on the discharge end of the receiving conveyor (2) is a positioner (4), by means of which the liquid pouches (3) while being fed onto the collector conveyor (5) from the receiving conveyor (2) are positioned into essentially the same line in the transverse direction of the collector conveyor (5).

5. Apparatus according to claim 4, **characterized in that** the grouper (6) is arranged to stop the liquid pouches (3) until the desired number of liquid pouches (3) are behind the grouper (6), after which it opens and lets the group proceed on the collector conveyor (5).

6. Apparatus according to claim 4 or 5, **characterized in that** the positioner (4) is a plate, the bottom end of which is bent towards the receiving conveyor for receiving the shorter side of a liquid pouch (3) and dropping the pouch onto the collector conveyor (5), and which plate is arranged to be turnable in such a way that its axis of turning (4') is transverse with respect to the direction of movement of the receiving conveyor (2).

7. Apparatus according to claim 6, **characterized in that** a counterweight (4") is arranged on the plate above the turning axis (4') to resist the force of an arriving liquid pouch (3) exerted on the bottom part of the plate.

## Patentansprüche

1. Verfahren zum Packen von Flüssigkeitsbeuteln (3), beispielsweise Milchbeuteln, in Verpackungskartons, wobei bei dem Verfahren die Flüssigkeitsbeutel (3) in ihrer Herstellungsmaschine (1) hergestellt werden, an einen Sammelförderer (5) übertragen und in Verpackungskartons fallen gelassen werden, wobei die Beutel, während sie auf den Sammelförderer (5) zugeführt werden, im Wesentlichen in der gleichen Linie in der transversalen Richtung des Sammelförderers (5) positioniert werden und wobei die Flüssigkeitsbeutel (3), bevor sie in die Verpackungskartons abgeworfen werden, auf dem Sammelförderer (5) in Gruppen von wenigstens zwei Flüssigkeitsbehältern zusammengestellt werden hinter einem öffnenden und schließenden Gruppierer (6), der quer über dem Sammelförderer (5) angeordnet ist, wobei der Gruppierer (6) öffnet, wenn die gewünschte Anzahl an Flüssigkeitsbeuteln (3) sich hinter ihm angesammelt hat, woraufhin sich die Flüssigkeitsbehälter (3) auf dem Sammelförderer (5) als eine Einzelgruppe fortbewegen und als eine Einzelgruppe in einen Verpackungskarton abgeworfen werden.

2. Verfahren nach Anspruch 1, **dadurch gekennzeichnet, dass** eine Gruppe aus drei Flüssigkeitsbeuteln (3) ausgebildet ist.

3. Verfahren nach Anspruch 1, **dadurch gekennzeichnet, dass** eine Gruppe aus vier Flüssigkeitsbeuteln (3) ausgebildet ist.

4. Vorrichtung zum Packen von Flüssigkeitsbeuteln (3), beispielsweise Milchbeuteln, in Verpackungskartons, wobei die Vorrichtung wenigstens einen Aufnahmeförderer (2) umfasst, um die Flüssigkeitsbeutel von der Herstellungsmaschine (1) zu transportieren, sowie auch einen Sammelförderer (5) in der Richtung quer zu dem Aufnahmeförderer, zum Sammeln der Flüssigkeitsbeutel von dem Aufnahmeförderer (2) und zu deren Transport vorwärts in Richtung der Packstation, wobei die Flüssigkeitsbeutel (3) derart angeordnet sind, dass sie in die Verpackungskartons fallen, wobei auf dem Sammelförderer (5) quer zu dessen Bewegungsrichtung wenigstens ein Gruppierer (6) ist, über den die auf dem Förderer transportieren Flüssigkeitsbeutel (3) zu Gruppen mit wenigstens zwei Flüssigkeitsbeuteln (3) zusammenstellbar sind und wobei sich oberhalb des Sammelförderers (5) am Abgabeende des Aufnahmeförderers (2) ein Positionierer (4) befindet, über den die Flüssigkeitsbeutel (3), während sie von dem Aufnahmeförderer (2) auf den Sammelförderer (5) zugeführt werden, in der im Wesentlichen gleichen Linie in transversaler Richtung des Sammelförderers (5) positioniert sind.

5. Vorrichtung nach Anspruch 4, **dadurch gekennzeichnet, dass** der Gruppierer (6) derart angeordnet ist, dass er die Flüssigkeitsbeutel (3) stoppt, bis die gewünschte Anzahl an Flüssigkeitsbeuteln (3) sich hinter dem Gruppierer (6) befindet, woraufhin er öffnet und die Gruppe sich auf dem Sammelförderer (5) vorwärts bewegen lässt.

6. Vorrichtung nach Anspruch 4 oder 5, **dadurch gekennzeichnet, dass** der Positionier (4) eine Platte ist, deren unteres Ende in Richtung des Aufnahmeförderers gebogen ist zum Zwecke der Aufnahme der kürzeren Seite eines Flüssigkeitsbeutels (3) und zum Fallenlassen des Beutels auf den Sammelförderer (5) und wobei die Platte derart angeordnet ist, dass sie derart drehbar ist, dass ihre Drehachse (4') quer in Bezug auf die Bewegungsrichtung des Aufnahmeförderers (2) ist.

7. Vorrichtung nach Anspruch 6, **dadurch gekennzeichnet, dass** ein Gegengewicht (4") an der Platte oberhalb der Drehachse (4') angeordnet ist, um der Kraft eines ankommenden Flüssigkeitsbeutels (3) zu widerstehen, die auf den unteren Teil der Platte ausgeübt wird.

## Revendications

1. Procédé pour emballer des poches de liquide (3), par exemple des poches de lait, dans des cartons d'emballage, procédé dans lequel les poches de liquide (3) sont fabriquées dans leur machine de fabrication (1), transférées à un transporteur collecteur (5) et déposées dans des cartons d'emballage, dans lequel les poches tout en étant apportées sur le transporteur collecteur (5) sont positionnées dans essentiellement la même ligne dans la direction transversale du transporteur collecteur (5), et dans lequel avant d'être déposées dans des cartons d'emballage, les poches de liquide (3) sont assemblées sur le transporteur collecteur (5) en groupes d'au moins deux poches de liquide derrière un élément de regroupement d'ouverture et de fermeture (6) agencé transversalement au-dessus du transporteur collecteur (5), lequel élément de regroupement (6) est ouvert lorsque le nombre souhaité de poches de liquide (3) s'est collecté derrière lui, après quoi les poches de liquide (3) avancent sur le transporteur collecteur (5) sous forme de groupe unique et sont déposées sous forme de groupe unique dans un carton d'emballage.

2. Procédé selon la revendication 1, **caractérisé en ce qu'**un groupe est formé à partir de trois poches de liquide (3).

3. Procédé selon la revendication 1, **caractérisé en ce qu'**un groupe est formé à partir de quatre poches de liquide (3).

4. Appareil pour emballer des poches de liquide (3), par exemple des poches de lait, dans des cartons d'emballage, lequel appareil comprend au moins un transporteur de réception (2) pour transporter les poches de liquide depuis la machine de fabrication (1), et également un transporteur collecteur (5) dans la direction transversale vis-à-vis du transporteur de réception, pour collecter les poches de liquide à partir du transporteur de réception (2) et pour les transporter vers l'avant vers le poste d'emballage, où les poches de liquide (3) sont agencées pour se déposer dans des cartons d'emballage, dans lequel agencé sur le transporteur collecteur (5) transversalement vis-à-vis de sa direction de déplacement se trouve au moins un élément de regroupement (6), au moyen duquel les poches de liquide (3) qui sont transportées sur le transporteur sont assemblées en groupes comprenant au moins deux poches de liquide (3), et dans lequel agencé au-dessus du transporteur collecteur (5) sur l'extrémité de décharge du transporteur de réception (2) se trouve un élément de positionnement (4), au moyen duquel les poches de liquide (3) tout en étant apportées sur le transporteur collecteur (5) depuis le transporteur de réception (2) sont positionnées dans essentiellement la même ligne dans la direction transversale du transporteur collecteur (5).

5. Appareil selon la revendication 4, **caractérisé en ce que** l'élément de regroupement (6) est agencé pour arrêter les poches de liquide (3) jusqu'à ce que le nombre souhaité de poches de liquide (3) se trouvent derrière l'élément de regroupement (6), après quoi il s'ouvre et laisse le groupe avancer sur le transporteur collecteur (5).

6. Appareil selon la revendication 4 ou 5, **caractérisé en ce que** l'élément de positionnement (4) est une plaque, dont l'extrémité basse est fléchie vers le transporteur de réception pour recevoir le côté plus court d'une poche de liquide (3) et déposer la poche sur le transporteur collecteur (5), et laquelle plaque est agencée pour pouvoir tourner de telle sorte que son axe de rotation (4') soit transversal vis-à-vis de la direction de déplacement du transporteur de réception (2).

7. Appareil selon la revendication 6, **caractérisé en ce qu'**un contrepoids (4") est agencé sur la plaque au-dessus de l'axe de rotation (4') pour résister à la force d'une arrivée de poche de liquide (3) exercée sur la partie basse de la plaque.
